# FASCICULE DE BREVET EUROPEEN

(11) **EP 1 044 130 B1**
(45) Date de publication et mention de la délivrance du brevet: **07.11.2001**
(21) Numéro de dépôt: 99901619.9
(22) Date de dépôt: 05.01.1999
(51) Int. Cl.: B62D 57/032, B62D 57/024, B62D 57/02

(54) **APPAREIL STABILISE PAR UN GYROSCOPE, ET NOTAMMENT UN ROBOT BIPEDE**
KREISELSTABILISIERTES GERÄT, INSBESONDERE EIN ZWEIBEINIGER ROBOTER
GYRO-STABILISED APPARATUS, AND IN PARTICULAR A TWO-WHEELED ROBOT

(30) Priorité: 06.01.1998 FR 9800050
(43) Date de publication de la demande: 18.10.2000
(73) Titulaire: COMMISSARIAT A L'ENERGIE ATOMIQUE, 75015 Paris (FR)
(72) Inventeur: VILLEDIEU, Eric, F-91240 Saint Michel sur Orge (FR)
(74) Mandataire: Ilgart, Jean-Christophe
(86) Numéro de dépôt international: FR9900006
(87) Numéro de publication internationale: WO9935026

(56) Documents cités:
- DE-A- 4 211 423
- MATSUMOTO,KAJITA,TANI: "a four-wheeled robot" IEEE INTERNATIONAL CONFERENCE, 21 mai 1995 (1995-05-21), pages 1700-1706, XP000701633
- JAMESON: "the walking gyro" ROBOTICS AGE, vol. 7, no. 1, janvier 1985 (1985-01), pages 7-10, XP002077720 Peterborough,NH,USA

## Description

Cette invention concerne un appareil configuré en pendule inverse par rapport à la gravité, stabilisé par un gyroscope, tel qu'un robot bipède selon l'application principalement envisagée.

Un appareil selon le préambule de la revendication 1 est connu de DE 42 11 423A1.

Les robots mobiles possèdent des constitutions extrêmement différentes selon leurs missions et les trajectoires qu'ils sont susceptibles de parcourir, mais le choix d'une bonne solution devient problématique dans les environnements encombrés, parsemés d'obstacles ou difficilement accessibles, car le robot doit alors posséder des qualités d'équilibre, d'agilité, de souplesse, de stabilité, etc. beaucoup plus importantes pour se faufiler entre des obstacles, les contourner ou les gravir. C'est ainsi que des robots chenillés dont certains présentaient plusieurs trains de chenilles successifs ont été proposés. Dans un appareil effectivement construit, le train de chenilles avant était articulé au reste du robot de façon à pouvoir être dressé obliquement et prendre l'inclinaison d'escaliers à gravir : les chenilles du train avant mordaient alors sur plusieurs nez de marche à la fois et permettaient d'amorcer la montée de l'escalier. Mais on peut reprocher aux véhicules chenillés un encombrement relativement important au sol et une difficulté pour virer avec précision.

Des robots montés sur des pattes ou des jambes ont aussi été proposés. Il existe des conceptions très différentes aussi bien en ce qui concerne le nombre de jambes ou de pattes que leurs propriétés et en particulier leurs possibilités de se déplacer ou de se déformer. Une construction extrême est celle d'un robot sauteur monopode, pourvu d'une patte unique : cette patte est rigide mais terminée par un vérin qui permet de l'allonger périodiquement, et elle est articulée à un corps de robot qu'elle doit soutenir. L'allongement brusque du vérin projette le corps du robot en l'air, et le système de pilotage règle la direction de la patte quand elle est décollée du sol afin de préparer le bond suivant et de remettre alors le robot en équilibre ou de le déplacer dans la direction voulue. Des prototypes réalisés montrent que cette conception est parfaitement viable malgré son absence de stabilité statique. On préfère toutefois en général des robots pourvus d'un nombre de pattes beaucoup plus important, et les robots hexapodes ont en particulier connu une vogue réelle. Les six pattes sont réparties en deux groupes de trois qui effectuent alternativement le même travail : l'un des groupes de pattes repose sur le sol et maintient l'équilibre du corps du robot pendant que l'autre groupe est soulevé et déplacé vers l'avant avant d'être abaissé pour fournir un nouvel appui au robot en avant du précédent, ce qui permet d'avancer le corps du robot quand le premier groupe de pattes est soulevé. Cette construction est très stable, car les pattes de chacun des groupes sont disposées en triangle de sustentation dans lequel le centre de gravité du robot est toujours contenu. Mais l'équilibre stable est obtenu au prix d'une complexité, d'un encombrement et d'un poids relativement importants du robot.

On est toutefois tenté de se rappeler que les environnements artificiels, tels que les usines, dans lesquels beaucoup de robots doivent se déplacer ont été conçus d'abord pour l'homme, et de conclure qu'un robot imitant autant que possible la forme et la démarche de l'homme devrait donner les meilleurs résultats en représentant un compromis satisfaisant entre les robots complexes, très stables mais encombrants, et les robots à petit nombre de pattes dont l'équilibre est problématique. L'expérience montre en effet que les robots bipèdes composés de jambes articulées indépendamment au corps de robot et munies d'une articulation de genou pour les fléchir et les étendre alternativement en imitant la marche de l'homme sont peu encombrants et susceptibles de servir dans des situations difficiles et compliquées en franchissant des obstacles variés. Mais une coordination stricte des différents moteurs commandant les articulations est nécessaire pour maintenir l'équilibre, et l'imitation de la marche humaine est moins facile qu'on pourrait le croire.

L'objet de l'invention est donc d'améliorer radicalement la stabilité d'appareils à l'équilibre relativement instable comme ceux configurés en pendule inverse tels que des robots monopodes, ou bipèdes, ou encore tripèdes puisqu'à certains moments de leur progression ils ne s'appuient que sur deux jambes, en les pourvoyant d'une toupie gyroscopique située dans un corps supérieur soutenu par la ou les jambes. La toupie gyroscopique constitue un « point d'appui inertiel » remplissant, pour un appareil dont l'équilibre statique n'est pas assuré, le même rôle qu'un balancier de funambule ; l'invention comporte aussi les automatismes permettant de tirer parti de ce point d'appui (capteurs ou détecteurs, système de commande, actionneurs placés, si on conserve l'image précédente, entre le balancier et le funambule) afin d'équilibrer l'appareil dans une position quelconque pendant un certain temps. En d'autres termes, l'invention permet d'assurer la stabilité de l'appareil à pendule inverse à tout instant, même si la jambe d'appui est fortement inclinée, sous réserve toutefois que certaines conditions de fonctionnement soient réunies.

Il faut distinguer cette toupie, destinée à assurer l'équilibre, du gyromètre représenté dans le robot de l'article de Matsumoto et autres « A fourwheeled robot to pass over steps by changing running control modes » (IEEE International Conference, 21 mai 1995, p.1700 à 1706), qui ne sert qu'à mesurer son inclinaison quand il est en équilibre dynamique et ne contribue aucunement à cet équilibre.

Les conditions de fonctionnement de la toupie sont liées à l'orientation de son axe de rotation, soit par rapport à la gravité, soit par rapport à la suspension mécanique entre le boîtier de la toupie et le corps supérieur (pour un appareil monopode) ou le corps intermédiaire (pour un appareil à au moins deux jambes). Elles varient continuellement compte tenu que l'axe de rotation de la toupie dérive sous l'effet de la précession. Notamment, cette dérive limite dans le temps la possibilité d'immobilisation de l'appareil dans une position où sa jambe d'appui est fortement inclinée. Il est possible de corriger cet effet par un basculement volontaire de l'ensemble de l'appareil dans une configuration symétrique (ou une série de configurations dont la résultante est symétrique) par rapport à la configuration d'équilibre du pendule inverse, soit avec une forte inclinaison maintenue peu de temps, soit avec une inclinaison plus faible maintenue plus longtemps. On voit alors que l'invention est particulièrement bien adaptée à la stabilisation d'un robot bipède marcheur, qui alterne naturellement les inclinaisons.

La toupie gyroscopique est placée dans un boîtier, lui-même relié au corps supérieur de l'appareil par une suspension mécanique qui autorise des mouvements de rotation selon deux axes non parallèles. Cette suspension à deux axes non parallèles est équipée d'actionneurs, capables d'exercer à chaque instant entre le boîtier de la toupie et le corps supérieur de l'appareil un couple d'équilibrage, antagoniste à l'effet du déséquilibre produit par la gravité sur l'appareil .

Le système de commande adapté à l'invention est apte à mesurer l'effet de basculement produit par la gravité sur l'appareil, à commander aux actionneurs une action antagoniste propre à équilibrer parfaitement cet appareil, et à maintenir cet appareil dans ses conditions de fonctionnement. Il est aussi apte à coopérer avec un autre système de commande, comme par exemple un système destiné à commander l'avance du robot, qui se trouve ainsi libéré de la fonction consistant à rechercher et maintenir l'équilibre.

Cette séparation des tâches des deux systèmes de commande, l'un gérant l'équilibre du robot et l'autre sa marche, est un avantage important de l'invention, qui rend la coopération des systèmes facile en supprimant la nécessité de les coordonner ou de les synchroniser avec rigueur. Elle distingue bien l'invention de l'article « The walking gyro » (Robotics Age, vol.7, n°1, janvier 1985, pages 7 à 10, Peterborough, NH, USA) de Jameson, où une toupie gyroscopique subit un basculement dont l'effet esst d'incliner une tige en forme de balancier aux extrémités de laquelle les pieds d'un robot bipède sont fixés : la toupie sert à lever alternativement les pieds sans que d'autres fonctions du robot (telles que l'équilibre ou la marche) soient évoquées.

Pour résumer, l'invention concerne un appareil composé d'au moins une jambe d'appui et d'un corps supérieur relié à la jambe d'appui, et configuré en pendule inverse par rapport à la gravité, caractérisé en ce que le corps supérieur comprend une toupie gyroscopique tournant autour d'un axe de rotation et logée dans un boîtier, le boîtier étant relié au corps supérieur par une liaison mécanique qui autorise des mouvements de rotation selon deux axes non parallèles, en ce que l'appareil comporte des capteurs permettant de mesurer un effet de déséquilibre produit par la gravité sur l'appareil (moment de basculement), des moyens permettant d'équilibrer l'appareil en exerçant des efforts opposé au déséquilibre (moment antagoniste) en prenant appui sur la toupie gyroscopique à l'aide d'actionneurs, et en ce qu'il comporte un système de commande apte à tirer partie des actionneurs et capteurs de l'appareil pour l'équilibrer à tout instant, voire à coopérer avec d'autres systèmes de commande, notamment destinés à commander la locomotion ou la trajectoire. Un mode de réalisation privilégié consiste à réaliser la liaison mécanique orientable entre la toupie et le corps supérieur à l'aide d'une suspension à la Cardan. Dans ce cas, le boîtier contenant la toupie est suspendu à un anneau intérieur de suspension par un axe rotatif intérieur de suspension perpendiculaire à l'axe de rotation de la toupie, et cet anneau intérieur est lui-même suspendu à un anneau extérieur de suspension par un axe rotatif extérieur de suspension, perpendiculaire à l'axe rotatif intérieur de suspension. L'anneau extérieur de suspension est solidaire du corps supérieur de l'appareil à équilibrer. Les axes de suspension intérieur et extérieur constituent ainsi les axes mécaniques effectifs selon lesquels la suspension est construite.

L'invention peut comporter avantageusement plusieurs jambes, et constituer un robot bipède marcheur, qui alterne naturellement les inclinaisons. Selon une réalisation particulière, il comporte deux jambes d'appui articulées au corps supérieur, composées de deux tronçons articulés entre eux. Chacun de ces tronçons peut comporter un pied, relié au tronçon inférieur par une articulation d'axe vertical, munie d'un moteur, qui permet les changements de direction dans la marche. Un tel robot est apte à se trouver en équilibre à tout instant, même lorsque son centre de gravité est excentré par rapport à son polygone de sustentation, comme par exemple dans la phase de la marche où il est fortement incliné et sur le point de poser à terre son deuxième pied.

Avantageusement, l'effet du déséquilibre dû à la gravité sur l'appareil peut être mesuré par deux inclinomètres ou deux capteurs de vitesse angulaire placés selon des axes orthogonaux, soit sur la jambe pour un robot monopode, soit sur un tronçon de raccordement dans le cas d'un robot bipède.

Dans le cas d'un robot marcheur, le système de commande peut exploiter l'alternance des moments de basculement en cherchant à rendre quasi nulle leur moyenne sur un certain intervalle de temps ou, ce qui revient au même, la moyenne des moments antagonistes de compensation.

L'invention peut comporter avantageusement des moyens permettant de mesurer l'orientation de l'axe de rotation de la toupie, afin de surveiller les conditions de fonctionnement de l'appareil, compte tenu que l'axe de rotation de la toupie dérive sous l'effet de la précession. Un moyen simple de mesurer cette orientation consiste à disposer sur les axes de la suspension mécanique des capteurs de position angulaire, et à les relier à une partie spécifique du système de commande.

On va maintenant décrire l'invention à l'aide des figures suivantes :
- la figure 1 est une vue d'une toupie gyroscopique conforme à l'invention,
- la figure 2 est une vue d'un appareil monopède stabilisé par un gyroscope, conforme à l'invention,
- la figure 3 est une vue d'un robot bipède stabilisé par un gyroscope, conforme à l'invention,
- et la figure 4 est un schéma d'un système de commande du robot conforme à l'invention.

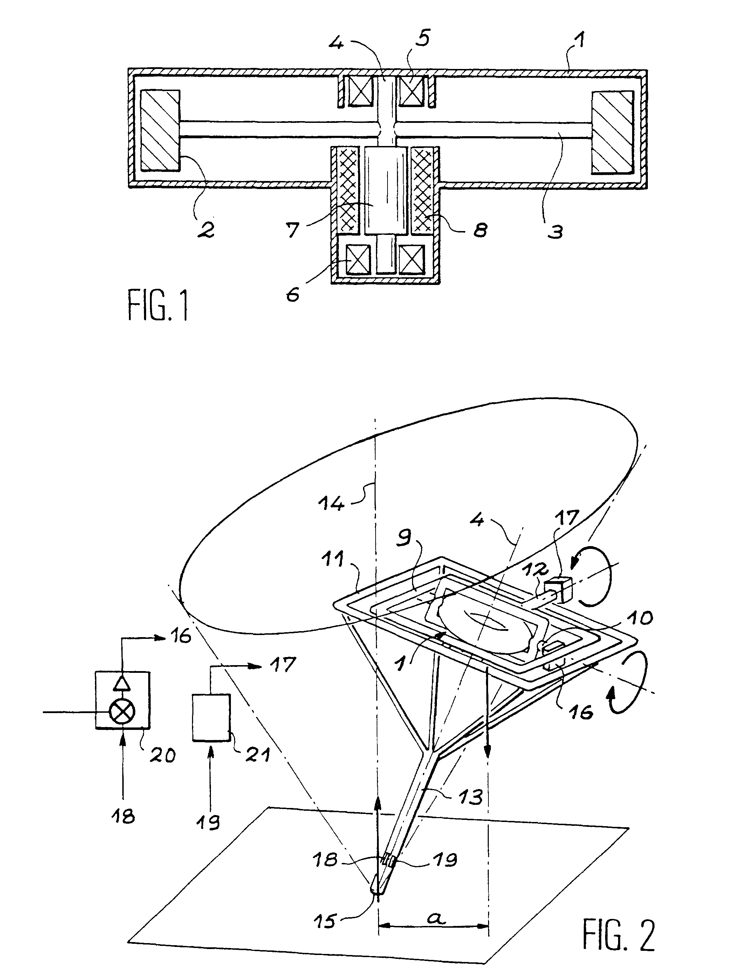

La **figure 1** représente une toupie enfermée dans un boîtier 1 et qui comprend essentiellement une pièce composée d'un volant d'inertie 2 et d'une jante 3 ; un axe de rotation 4 est uni à la jante 3 et tourne à grande vitesse dans une paire de paliers 5 et 6, généralement des paliers magnétiques ou sans contact matériel afin de supprimer les frottements. Le boîtier 1 est mis sous vide pour le même effet. L'axe de rotation 4 est garni d'un induit 7 pouvant être entraîné par un bobinage 8 d'un moteur électrique, afin de lancer la toupie gyroscopique au début d'une mission. Une fois lancée, la toupie peut aussi constituer un moyen de stockage sous forme mécanique de l'énergie nécessaire à l'appareil durant la mission. Pour cela, on préconise d'utiliser un moteur électrique réversible, c'est-à-dire qui soit aussi apte à fonctionner en générateur, en recueillant dans le bobinage 8 un courant induit par la rotation libre de l'induit 7. De tels moteurs réversibles sont connus dans la technique et ne seront donc pas décrits davantage ici.

La **figure 2** constitue un mode de réalisation particulier, où le dispositif de la figure 1 ainsi que les capteurs, actionneurs et le système de commande conformes à l'invention sont incorporés dans un corps d'appareil à équilibrer. Par souci de représentation le boîtier 1 est symbolisé par un simple cadre et l'axe de rotation 4 matériel est figuré par un axe immatériel. Le boîtier 1 est suspendu à un anneau intérieur 9 qui l'entoure, par l'intermédiaire d'un axe intérieur de suspension 10 perpendiculaire à l'axe de rotation 4 ; de façon similaire, l'anneau intérieur 9 est suspendu à un anneau extérieur 11, par l'intermédiaire d'un axe extérieur de suspension 12 orienté perpendiculairement à l'axe intérieur de suspension 10. L'anneau extérieur 11 fait partie de la structure extérieure du corps de l'appareil et peut par exemple reposer sur le sol par une patte unique 13. La toupie composée du volant d'inertie 2 et de la jante 3 est donc une toupie gyroscopique, dont l'axe de rotation 4 peut prendre n'importe quelle direction grâce à des rotations appropriées des axes de suspension 10 et 12.

Si on rend le système indéformable dans la configuration de la figure 2, à l'exception de la toupie qui reste libre de tourner autour de l'axe de rotation 4, en bloquant les axes de suspension 10 et 12, l'appareil reste en équilibre dynamique sur la patte 13 et effectue un mouvement en orbite de précession, dans lequel l'axe de rotation 4 parcourt un cône de révolution dont l'axe central est la verticale 14 passant par le point d'appui 15 de la patte 13 au sol. La vitesse de précession est assez lente en pratique et pourrait donc être acceptable pour de nombreuses applications. Le brevet allemand 42 11 423 décrit un robot bipède muni d'une telle toupie gyroscopique dont l'axe de rotation est fixe sur le corps du robot et assure donc un tel équilibre dynamique, mais le mouvement de précession, qui s'accompagne de mouvements de levée et d'abaissement des jambes, doit compliquer beaucoup la marche, et le maintien de l'équilibre à long terme n'est pas certain.

On choisit de ne pas se contenter de cette situation, mais on cherche à immobiliser temporairement le corps de l'appareil (comprenant notamment l'anneau extérieur 11 et la patte 13). Les axes de suspension 10 et 12 sont pour cela munis de moteurs respectifs 16 et 17 que portent les anneaux 9 et 11. Si on raisonne en équilibre de forces, on peut constater que l'appareil est sujet à un moment de basculement égal au produit de son poids (P=Mg) et de la longueur de la projection horizontale entre le point d'appui au sol 15 et le centre de gravité du système. On agit alors sur les moteurs 16 et 17 pour soumettre les axes de suspension 10 et 12 à des moments dont la somme est un moment antagoniste qui équilibre ce moment de basculement. Ce moment de basculement évoluant dans le temps, la commande du moment antagoniste doit être générée par une boucle d'asservissement.

Pour mesurer l'effet du basculement, on peut en pratique disposer des gyromètres 18 et 19, ou des inclinomètres, orthogonalement sur la patte 13. Les mesures de vitesse de basculement sont transmises à des boucles d'asservissement 20 et 21 qui commandent respectivement les moteurs 16 et 17.

L'équilibre est temporairement réalisé pour des vitesses de consigne nulles données aux boucles d'asservissement, c'est-à-dire quand la vitesse de basculement mesurée par les gyromètres 18 et 19 est nulle en moyenne pendant une durée relativement brève ; sinon, une vitesse de consigne non nulle est introduite pour redresser le corps de l'appareil.

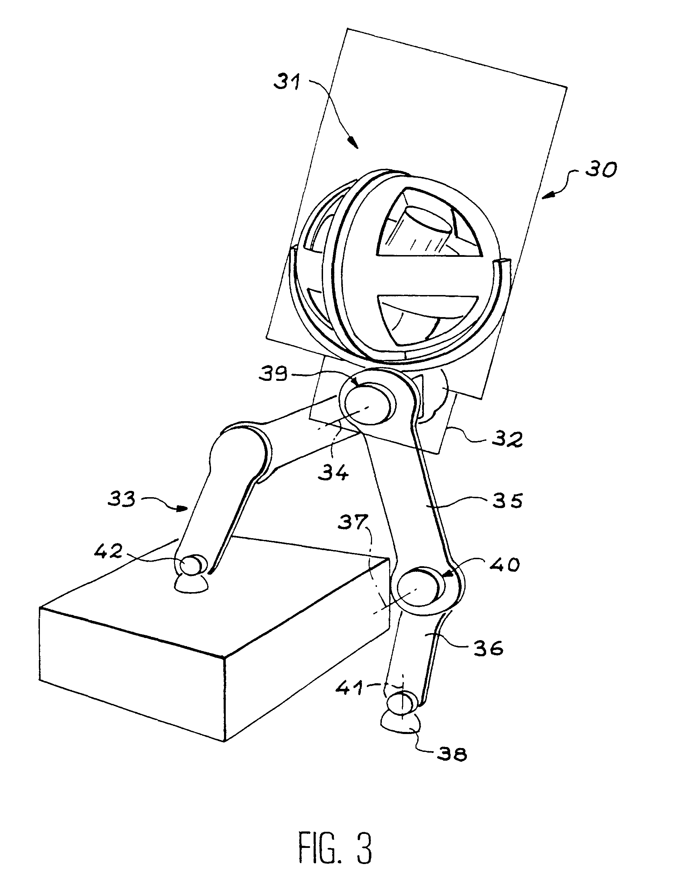

La **figure 3** représente un autre mode de réalisation particulier, où le dispositif de la figure 1 ainsi que les capteurs, actionneurs et le système de commande conformes à l'invention sont incorporés dans un robot bipède. Il comprend un corps supérieur 30 équipé d'un ensemble à toupie gyroscopique 31 répondant à la description des figures 1 et 2, si ce n'est que la patte 13 reposant sur le sol est ici omise. Elle est remplacée par un tronçon de raccordement 32 (porteur des gyromètres 18 et 19, qui ne sont cependant pas représentés) et auquel les deux jambes 33 (respectivement 33d pour la jambe droite et 33g pour la jambe gauche) du robot sont articulées par une articulation de hanche 34 (respectivement 34d pour la jambe droite et 34g pour la jambe gauche). Les jambes 33 se composent d'un tronçon supérieur 35 et d'un tronçon inférieur 36 articulés entre eux à une articulation de genou 37 pour reproduire les éléments essentiels de la jambe humaine ; le tronçon inférieur 36 est muni d'un pied 38 qui peut être circulaire et de très petite surface grâce aux propriétés, favorables à la conservation de l'équilibre, du système gyroscopique, ce qui distingue avantageusement l'invention d'autres robots bipèdes où l'on prévoit de grands pieds rectangulaires pour garantir l'équilibre en toutes circonstances.

La marche est commandée de façon extrêmement simple : le robot reste en appui sur une des jambes 33 tandis que l'autre est avancée pour faire un pas. L'extension de la jambe avant et la flexion de la jambe arrière permettent ensuite de transférer le poids du corps de robot 30 d'une jambe à l'autre, comme dans la démarche humaine. La commande de stabilisation du corps de robot 30 par la toupie est assurée par le système de commande 45 et les boucles d'asservissement 20 et 21, indépendamment de la commande d'avance du robot ou de sa trajectoire qui est assurée par un autre système de commande, indépendant mais avec lequel celui de l'invention coopère. Ceci résulte de l'équilibre du robot à tous les instants intermédiaires entre deux pas, contrairement à l'art antérieur où le déséquilibre temporaire interférait avec la commande de locomotion ou la trajectoire.

Cet équilibre rend particulièrement intéressant un procédé pour faire tourner le robot à l'aide d'une articulation d'axe vertical 41, reliant chacun des pieds 38 au tronçon inférieur 36 associé, et munie d'un moteur 42 qu'on met en marche quand la jambe en question repose sur le sol.

Avantageusement, l'énergie nécessaire aux différents moteurs et aux automatismes embarqués est prélevée de l'énergie de rotation de la toupie et le robot ne transporte aucune autre source d'énergie. En choisissant un moteur de type réversible, on peut utiliser la tension aux bornes du bobinage 8 à condition de recourir à un boîtier de régulation et distribution de cette énergie. L'énergie cinétique de la toupie se transforme alors peu à peu en énergie électrique. La quantité d'énergie qu'il est possible d'accumuler dans une toupie gyroscopique est suffisante pour que le robot bipède puisse accomplir des missions concrètes : prenons le cas d'une toupie en fibre de carbone, matière choisie pour la grande vitesse tangentielle v=ωr qu'il est possible de lui infliger (v supérieure à 800 m/s environ) ; la vitesse angulaire ω pourra dépasser ω=8000 rd/s, et pour un rayon de r=0,10 m où la matière de la toupie est concentrée, le moment cinétique H=mr²ω sera supérieur à 80 Nms pour une toupie de masse égale à 1 kg. Or le moment cinétique d'une toupie peut s'interpréter comme le produit d'une réserve de couple C disponible pendant un temps t. Il est donc possible d'appliquer des couples relativement importants, suffisants pour stabiliser un robot léger ou le redresser après une chute.

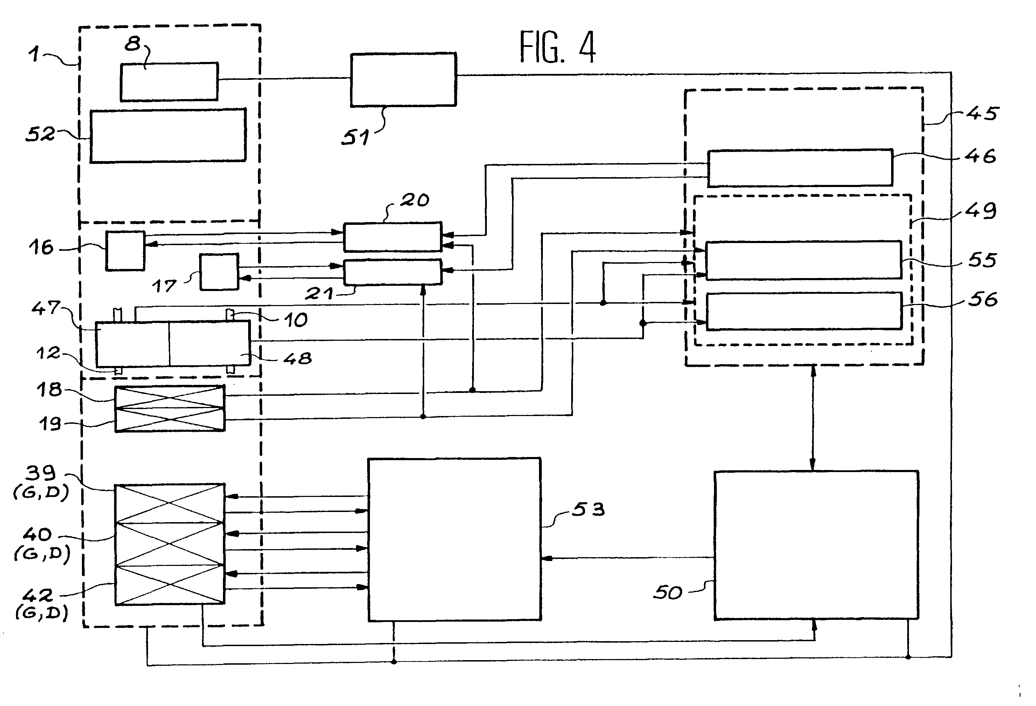

La **figure 4** est un schéma d'un système de commande du robot conforme à l'invention. Avant chaque mission, la toupie gyroscopique est accélérée en alimentant le moteur réversible à partir d'une source extérieure de courant continu, puis le robot est lâché. Sur le schéma on a figuré la plupart des éléments actifs du robot, et en particulier le boîtier de la toupie gyroscopique, les actionneurs 16 et 17 qui sont ici des moteurs électriques, et les gyromètres 18 et 19.

Les éléments de commande 45 comprennent notamment un système d'équilibrage 46 qui fournit un signal de consigne aux boucles d'asservissement 20 et 21 selon la description de la figure 2. Celles-ci fournissent du courant aux moteurs réversibles 16 et 17, à partir du courant produit par la transformation de l'énergie cinétique de la toupie gyroscopique.

Selon une réalisation préférentielle, des capteurs de position angulaire 47 et 48 qui mesurent la position angulaire de l'axe intérieur de suspension 10 et de l'axe extérieur de suspension 12 sont utilisés pour surveiller les conditions de fonctionnement de l'appareil, compte tenu que l'axe de rotation de la toupie dérive sous l'effet de la précession. Ces capteurs de position angulaire sont reliés à une partie spécifique du système de commande appelée système de supervision 49, qui est aussi chargée de commander les basculements volontaires de l'ensemble de l'appareil dans une configuration symétrique par rapport à la configuration d'équilibre du pendule inverse, afin d'engendrer par précession une dérive opposée de l'axe de rotation de la toupie.

Enfin ce système de supervision 49 est apte à coopérer avec un ou plusieurs autres systèmes de commande 50, chargés par exemple de commander la locomotion ou la trajectoire de l'engin, de manière à libérer ces autres systèmes de commande de toutes les fonctions nécessaires à la recherche et au maintien de l'équilibre, ainsi que de toutes les fonctions nécessaires au maintien de l'invention dans ses conditions de fonctionnement.

On a encore représenté sur la figure 4 d'autres éléments du robot qui ne ressortissent pas directement à l'invention, à savoir un boîtier de conditionnement d'énergie 51 relié à l'induit 8 et aux systèmes de commande et d'actionnements pour leur délivrer de l'énergie sous une forme utile pour eux, un capteur de vitesse angulaire 52 mesurant la vitesse de l'axe 4 pour vérifier si elle est suffisante, des boucles d'asservissement 53 de la position des jambes 33, dirigées par un des autres systèmes de commande 50, commandant à des moteurs 39, 40, 42 correspondant aux articulations 34, 37, 41. Ces articulations, présentes sur chacune des jambes gauche et droite, sont munies de capteurs (non représentés) pour les asservir aux positions voulues. Enfin, on a vu que le système de supervision 46 pouvait être décomposé en un système de gestion des basculements volontaires 55 destiné à redresser le robot et un système d'évitement des configurations interdites 56 qui interdit à la toupie gyroscopique d'atteindre des positions où elle ne pourrait plus servir de point d'appui inertiel.

Une autre application possible de l'invention, différente d'un robot mobile, consiste en un échafaudage dynamique pour effectuer un travail de réparation ou d'inspection en hauteur. Il suffit d'équiper le dispositif de la figure 2 d'un outil ou d'un équipement souhaité lié au corps de l'appareil, et de le laisser se dresser sur le pied 13, qui peut être articulé ou télescopique, quand la toupie a été chargée d'énergie cinétique. Il suffit de mettre en marche les boucles d'asservissement 20 et 21 de la figure 2 pour stabiliser l'échafaudage. A l'issue de la mission, le pied est rétracté, ou l'appareil est accosté à une paroi, avant l'arrêt de la toupie.

## Revendications

1. Appareil composé d'au moins une jambe d'appui (13, 33) et d'un corps supérieur (11, 30) relié à la jambe d'appui, et configuré en pendule inverse par rapport à la gravité, où le corps supérieur comprend une toupie gyroscopique (2, 3) tournant autour d'un axe de rotation (4) et logée dans un boîtier (1), **caractérisé en ce que** le boîtier est relié au corps supérieur par une liaison mécanique qui autorise des mouvements de rotation selon deux axes non parallèles, l'appareil comporte des capteurs (18, 19) permettant de mesurer un effet de déséquilibre produit par la gravité sur l'appareil, des moyens permettant d'équilibrer l'appareil en exerçant des efforts antagonistes, en prenant appui sur la toupie gyroscopique à l'aide d'actionneurs (16, 17), et un système de commande associé, apte à tirer partie des actionneurs et capteurs de l'appareil pour l'équilibrer.

2. Appareil selon la revendication 1, **caractérisé en ce que** la liaison mécanique qui autorise des mouvements de rotation selon deux axes non parallèles est réalisée par une suspension à la Cardan, c'est-à-dire par suspension du boîtier (1) à un anneau intérieur (9) de suspension, à l'aide d'un axe rotatif intérieur de suspension (10) perpendiculaire à l'axe de rotation (4), et par suspension de l'anneau intérieur à un anneau extérieur de suspension (11), à l'aide d'un axe rotatif extérieur de suspension (12) perpendiculaire à l'axe de rotation (10).

3. Appareil selon la revendication 1, **caractérisé en ce qu'**il est un robot mobile bipède, marcheur, comprenant deux jambes d'appui (33) articulées au corps supérieur (30), composées de deux tronçons (35, 36) articulés entre eux, et apte à se trouver en équilibre à tout instant, même lorsque son centre de gravité est excentré d'un polygone de sustentation délimité par des pieds (38) d'appui des jambes.

4. Appareil selon la revendication 1, **caractérisé en ce que** l'effet de déséquilibre produit par la gravité sur l'appareil est mesuré au moyen de gyromètres (18, 19) de mesure de vitesse de basculement ou d'inclinomètres, et que le système de commande (45) est sensible aux mesures de ces gyromètres ou inclinomètres, et fait délivrer par les actionneurs (16, 17) des moments antagonistes dépendant de la vitesse de basculement.

5. Appareil selon la revendication 4, **caractérisé en ce que** le système de commande comprend des moyens de calcul de la moyenne temporelle de moments de basculement, reliés à un moyen d'asservissement (20, 21) des actionneurs, calculant les moments antagonistes à faire délivrer par les actionneurs, de façon que les moments de basculement aient une moyenne temporelle nulle.

6. Appareil selon la revendication 1, **caractérisé en ce qu'**il comporte des moyens (47, 48) permettant de mesurer l'orientation du boîtier de la toupie par rapport au corps supérieur ou à un tronçon de raccordement (32) de l'appareil.

7. Appareil selon la revendication 1, **caractérisé en ce que** le système de commande utilise des informations de moyens de mesure (47,48) de l'orientation de l'axe de rotation (4) de la toupie par rapport au corps supérieur de l'appareil pour maintenir l'appareil dans ses conditions de fonctionnement.

8. Appareil selon la revendication 1, **caractérisé en ce que** le système de commande, chargé de gérer l'équilibre, est aussi capable de coopérer avec un ou plusieurs autres systèmes de commande (50, 53), chargés de commander les déplacements de l'appareil.

9. Appareil selon la revendication 1, **caractérisé en ce que** la toupie gyroscopique (2, 3) est une unique source d'énergie de l'appareil et qu'elle est entraînée par un moteur réversible (7, 8) pouvant travailler comme générateur d'électricité.

10. Appareil selon la revendication 1, **caractérisé en ce que** la toupie gyroscopique (2, 3) est logée dans une enceinte à vide (1) et que l'axe de rotation (4) est soutenu par des paliers sans contact (5, 6).

## Patentansprüche

1. Gerät mit wenigstens einem Stützbein (13, 33) und einem oberen Körper (11, 30), verbunden mit dem Stützbein und konfiguriert als umgekehrtes Pendel in Bezug auf die Schwerkraft, wobei der obere Körper einen gyroskopischen Kreisel (2, 3) umfasst, der um eine Drehachse (4) rotiert und in ein Gehäuse (1) eingebaut ist,
**dadurch gekennzeichnet,**
**dass** das Gehäuse mit dem oberen Körper durch eine mechanische Verbindung verbunden ist, die Drehbewegungen um zwei nichtparallele Achsen zulässt, das Gerät Sensoren (18, 19) umfasst, die ermöglichen, einen Ungleichgewichtseffekt zu messen, erzeugt durch die auf das Gerät wirkende Schwerkraft, Einrichtungen umfasst, die ermöglichen, das Gerät ins Gleichgewicht zu bringen, indem sie Gegenkräfte ausüben, wobei sie sich mit Hilfe von Betätigungselementen (16, 17) auf dem gyroskopischen Kreisel abstützen, und ein zugeordnetes Steuersystem umfasst, das fähig ist, die Betätigungselemente und Sensoren des Geräts zu nutzen, um es ins Gleichgewicht zu bringen.

2. Gerät nach Anspruch 1, **dadurch gekennzeichnet, dass** die mechanische Verbindung, die Drehbewegungen um zwei nichtparallele Achsen zulässt, mittels einer kardanischen Aufhängung realisiert wird, d.h. durch Aufhängung des Gehäuses (1) an einem inneren Aufhängungsring (9) mit Hilfe einer zur Drehachse (4) senkrechten inneren Aufhängungsdrehachse (10), und durch Aufhängung des inneren Aufhängungsrings an einem äußeren Aufhängüngsring (11) mit Hilfe einer zur Drehachse (10) senkrechten äußeren Aufhängungsdrehachse (12).

3. Gerät nach Anspruch 1, **dadurch gekennzeichnet, dass** es ein mobiler zweibeiniger Roboter ist, der gehen kann, zwei an dem oberen Körper (30) angelenkte Stützbeine (33) umfasst, die gebildet werden durch zwei gelenkig miteinander verbundene Teilstücke (35, 36), und der fähig ist, sich zu jedem Zeitpunkt im Gleichgewicht zu befinden, selbst dann, wenn sein Schwerpunkt sich außerhalb eines Unterstützungs-Polygons befindet, das durch Stützfüße (38) der Beine begrenzt wird.

4. Gerät nach Anspruch 1, **dadurch gekennzeichnet, dass** der durch die auf das Gerät wirkende Schwerkraft erzeugte Ungleichgewichtseffekt mittels Gyrometern (18, 19) zur Messung der Umfall- bzw. Kippgeschwindigkeit oder Inklinationsmetern gemessen wird, und dass das Steuersystem (45) sensibel ist für die Messungen dieser Gyrometer oder Inklinationsmeter und bewirkt, dass die Betätigungselemente (16, 17) Gegenmomente liefern, die von der Umfall- bzw. Kippgeschwindigkeit abhängen.

5. Gerät nach Anspruch 4, **dadurch gekennzeichnet, dass** das Steuersystem Einrichtungen zur Berechnung des Zeitmittelwerts der Kippmomente umfasst, die verbunden ist mit einer Einrichtung (20, 21) zur Regelung der Betätigungselemente, das die Gegenmomente berechnet, welche die Betätigungselemente liefern müssen, damit die Kippmomente einen Zeitmittelwert null haben.

6. Gerät nach Anspruch 1, **dadurch gekennzeichnet, dass** es Einrichtungen (47, 48) umfasst, die ermöglichen, die Ausrichtung des Gehäuses des Kreisels in Bezug auf den oberen Körper oder auf ein Anschluss- bzw. Verbindungsstück (32) des Geräts zu messen.

7. Gerät nach Anspruch 1, **dadurch gekennzeichnet, dass** das Steuersystem Informationen von Messeinrichtungen (47, 48) der Ausrichtung der Drehachse (4) des Kreisels in Bezug auf den oberen Körper des Geräts benutzt, um das Gerät innerhalb seiner Betriebsbedingungen zu halten bzw. die Betriebsbedingungen des Geräts aufrechtzuerhalten.

8. Gerät nach Anspruch 1, **dadurch gekennzeichnet, dass** das Steuersystem, dessen Aufgabe es ist, das Gleichgewicht herzustellen, auch fähig ist, mit einem oder mehreren anderen Steuersystemen (50, 53) zu kooperieren, deren Aufgabe es ist, die Bewegungen des Geräts zu steuern.

9. Gerät nach Anspruch 1, **dadurch gekennzeichnet, dass** der gyroskopische Kreisel (2, 3) eine einzige Energiequelle des Geräts ist und dass er von einem Wendemotor (7, 8) angetrieben wird, der als elektrischer Generator arbeiten kann.

10. Gerät nach Anspruch 1, **dadurch gekennzeichnet, dass** der gyroskopische Kreisel (2, 3) in eine Vakuumbehälter (1) eingebaut ist, und dass die Drehachse (4) in kontaktfreien Lagern (5,6) sitzt.

## Claims

1. Appliance made up of at least one supporting leg (13, 33) and an upper body (11, 30) connected to the supporting leg, and configured in reverse pendulum relative to gravity, in which the upper body comprises a gyroscopic rotor wheel (2, 3) rotating about a rotor axle (4) and housed in a casing (1), **characterised in that** the casing is connected to the upper body by a mechanical connection which permits rotational movements about two non-parallel axes, the appliance comprises sensors (18, 19) for the measurement of an off-balance effect produced by gravity on the appliance, means to balance the appliance by exerting opposing forces, using the support of the gyroscopic rotor wheel via actuators (16, 17), and an associated command system able to take advantage of the actuators and sensors of the appliance to give it equilibrium.

2. Appliance according to claim 1, **characterised in that** the mechanical connection which permits rotational movements about two non-parallel axes is made by a Cardan suspension, that is to by suspending the casing (1) from an inner suspension ring (9) by means of an inner rotating suspension axle (10) perpendicular to rotor axle (4), and by suspending the inner ring from an outer suspension ring (11) by means of an outer rotating suspension axle (12) perpendicular to rotor axle (4).

3. Appliance according to claim 1, **characterised in that** it is a mobile, two-legged, walking robot, comprising two supporting legs (33) jointed with the upper body (30) and made up of two sections (35, 36) jointed together and able to be in equilibrium at any time, even when its centre of gravity is off-centre from a base delimited by the feet (38) supporting the legs.

4. Appliance according to claim 1, **characterised in that** the off-balance effect produced by gravity on the appliance is measured by means of gyrometers (18, 19) to measure tilt velocity, or tilt meters, and **in that** the command system (45) is sensitive to the measurements of these gyrometers or tilt meters and causes opposing moments dependent on tilt velocity to be applied via actuators (16, 17).

5. Appliance according to claim 4, **characterised in that** the command system comprises means for calculating the time average of moments of tilt, connected to servo-control means (20, 21) for the actuators, calculating the opposing moments to have applied by the actuators such that the moments of tilt have a zero time average.

6. Appliance according to claim 1, **characterised in that** it comprises means (47, 48) with which it is possible to measure the orientation of the casing of the rotor wheel relative to the upper body or to a connecting section (32) of the appliance.

7. Appliance according to claim 1, **characterised in that** the command system uses information from the measurement means (47, 48), on the orientation of rotor axle (4) of the rotor wheel relative to the upper body of the appliance, to maintain the appliance within its operating conditions.

8. Appliance according to claim 1, **characterised in that** the command system, in charge of managing equilibrium, is also able to co-operate with one or more command systems (50, 53), in charge of commanding travel movements of the appliance.

9. Appliance according to claim 1, **characterised in that** the gyroscopic rotor wheel (2, 3) is a sole source of energy for the appliance, and **in that** it is driven by a reversible motor (7, 8) able to operate as an electricity generator.

10. Appliance according to claim 1, **characterised in that** the gyroscopic rotor wheel (2, 3) is housed in a vacuumed casing (1), and **in that** the rotor axle (4) is supported by bearings having no contact (5, 6).
